# EUROPEAN PATENT SPECIFICATION

(11) **EP 4 080 247 B1**
(45) Date of publication and mention of the grant of the patent: **15.10.2025**
(21) Application number: 21207091.6
(22) Date of filing: 09.11.2021
(51) Int. Cl.: G01S 17/931, G01S 7/481, G02B 6/32, G02B 6/34, G02B 6/35, H04Q 11/00

(54) **LIDAR APPARATUS COMPRISING PLURALITY OF SWITCHES**
LIDAR-VORRICHTUNG MIT MEHREREN SCHALTERN
APPAREIL LIDAR COMPRENANT UNE PLURALITÉ DE COMMUTATEURS

(30) Priority: 20.04.2021 KR 20210051355
(43) Date of publication of application: 26.10.2022
(73) Proprietor: Samsung Electronics Co., Ltd., Suwon-si, Gyeonggi-do 16677 (KR)
(72) Inventor: SHIN, Dongjae, 16678, Suwon-si, (KR); BYUN, Hyunil, 16678, Suwon-si, (KR); SHIN, Changgyun, 16678, Suwon-si, (KR); LEE, Changbum, 16678, Suwon-si, (KR); HWANG, Inoh, 16678, Suwon-si, (KR)
(74) Representative: Elkington and Fife LLP

(56) References cited:
- EP-A1- 3 555 681
- US-A1- 2018 210 068
- US-A1- 2019 146 087

## Description

### FIELD OF THE INVENTION

Example embodiments of the present disclosure relate to light detection and ranging (LiDAR) apparatuses that steer light by using a plurality of switches instead of using an optical phase array (OPA).

### BACKGROUND OF THE INVENTION

Recently, advanced driving assistance systems (ADAS) having various functions have been commercialized. For example, there is a tendency of increasing the number of vehicles equipped with functions such as an adaptive cruise control (ACC), which reduces a speed of a vehicle if there is a risk of collision and the vehicle is driven within a set speed range if there is no risk of collision by recognizing a location and speed of another vehicle, and an autonomous emergency braking system (AEB), which automatically applies braking to prevent collisions when there is a risk of collision by recognizing the vehicle in front, and the driver does not respond to the risk or the response method is inappropriate. In addition, it is expected that autonomous driving cars will be commercialized in the near future.

Accordingly, the importance of a vehicle radar that provides forward information of a vehicle is gradually increasing. For example, light detection and ranging (LiDAR) sensors are widely used as vehicle radars. The LiDAR sensors measure a distance, speed, azimuth, and position of an object from the time when a laser scattered or reflected returns to a vehicle, changes in the intensity of the laser, changes in the frequency of the laser, and changes in the polarization state of the laser.

EP 3 555 681 A1 describes an optical switch network including a common input/output port, and a waveguide having a length and being optically coupled to the common input/output port.

US 2019/146087 A1 describes a MEMS optical switch-based LiDAR beam steering unit comprising an optical switching array comprising two or more translatable optical switch gratings.

US 2018/210068 A1 describes a LiDAR including a laser having a first frequency-modulated laser radiation and a second frequency-modulated laser radiation.

### SUMMARY OF THE INVENTION

The invention is defined by independent claim 1. Preferred embodiments thereof are defined by the claims dependent theron.

One or more example embodiments provide light detection and ranging (LiDAR) apparatuses that may steer light by using a plurality of switches.

Additional aspects will be set forth in part in the description which follows and, in part, will be apparent from the description, or may be learned by practice of example embodiments.

According to a most general aspect of an example embodiment, there is provided a light detection and ranging (LiDAR) apparatus including a plurality of switches connected in a binary tree structure, a light source connected to a root switch, from among the plurality of switches, provided at a root node of the binary tree structure, a photodetector connected to the root switch, and a light transmission/reception optical system connected to a plurality of terminal switches, from among the plurality of switches, provided at a plurality of terminal nodes of the binary tree structure, the light transmission/reception optical system being configured to transmit light to an outside of the LiDAR apparatus or receive light from the outside, wherein the root switch is a 2×2 switch including a first upstream side port, a second upstream side port, a first downstream side port, and a second downstream side port, and wherein the light source is connected to the first upstream side port and the photodetector is connected to the second upstream side port.

The plurality of switches are configured to transmit light emitted from the light source to the light transmission/reception optical system through one of the plurality of terminal switches, and transmit light received from the light transmission/reception optical system to the photodetector through one of the plurality of terminal switches.

The root switch may include a first electro-optic element provided between the first upstream side port and the first downstream side port and a second electro-optic element provided between the second upstream side port and the second downstream side port, and the first electro-optic element and the second electro-optic element may be configured to amplify input light and to modulate a phase of the input light based on an applied current.

The root switch may further include a first coupler configured to optically couple the first upstream side port to the second upstream side port, and a second coupler configured to optically couple the first downstream side port to the second downstream side port.

Based on a phase difference between light amplified by the first electro-optic element and light amplified by the second electro-optic element, the root switch may be configured to operate in one of a first state in which light input to the first upstream side port is transmitted to the second downstream side port and light input to the second upstream side port is transmitted to the first downstream side port, a second state in which the light input to the first upstream side port is transmitted to the first downstream side port and the light input to the second upstream side port is transmitted to the second downstream side port, and a third state in which the light input to the first upstream side port is transmitted to the first downstream side port and the second downstream side port and the light input to the second upstream side port is transmitted to the first downstream side port and the second downstream side port.

The root switch may be configured to operate in the first state when the phase difference is 0, operate in the second state when the phase difference is π, and operate in the third state when the phase difference is greater than 0 and less than π.

The LiDAR apparatus may further include at least one processor configured to extract distance information with respect to external objects based on a time of flight (TOF) method, the root switch may be configured to operate in the first state while transmitting light and operate in the second state while receiving light, or operate in the second state while transmitting light and operate in the first state while receiving light.

The LiDAR apparatus may further include at least one processor configured to extract distance information and speed information with respect to external objects based on a frequency modulated continuous wave (FMCW) method, and the root switch may be configured to operate in the third state.

The root switch may further include a first monitoring photodetector configured to measure an intensity of light passing through the first downstream side port, and a second monitoring photodetector configured to measure the intensity of light passing through the second downstream side port.

The LiDAR apparatus may further include at least one processor configured to control operations of the plurality of switches, and to perform calibration to control the root switch based on an output of the first monitoring photodetector and the second monitoring photodetector.

The at least one processor may be configured to periodically perform calibration, or to perform calibration when a signal-to-noise ratio of the LiDAR apparatus is less than a reference value.

The at least one processor may be further configured to store an initial current value to be applied to the first electro-optic element and the second electro-optic element to switch the root switch to the first state, the second state, or the third state, and based on a result of the calibration, adjust a current value applied to the first electro-optic element and the second electro-optic element.

The plurality of switches may include a first switch connected to the first downstream side port of the root switch and a second switch connected to the second downstream side port of the root switch, and the first switch and the second switch may be 2x2 switches including the first upstream side port, the second upstream side port, the first downstream side port, and the second downstream side port.

The second upstream side port of the first switch may be connected to the first downstream side port of the root switch, and the first upstream side port of the second switch may be connected to the second downstream side port of the root switch, and the LiDAR apparatus may further include a first auxiliary light source connected to the first upstream side port of the first switch and a second auxiliary light source connected to the second upstream side port of the second switch.

The LiDAR apparatus may further include at least one processor configured to extract distance information and speed information with respect to external objects based on a frequency modulated continuous wave (FMCW) method, a first waveguide configured to provide a portion of light output from the first auxiliary light source to the photodetector as local oscillator light and a second waveguide configured to provide a portion of light output from the second auxiliary light source to the photodetector as local oscillator light.

The light source may be a tunable light source configured to adjust a wavelength of light emitted from the light source.

The LiDAR apparatus may further include a bandpass filter configured to pass light of a same wavelength band as a wavelength band of light emitted from the light source, and the bandpass filter may be provided between the second upstream side port of the root switch and the photodetector.

The LiDAR apparatus may further include at least one processor configured to extract distance information and speed information with respect to external objects based on a frequency modulated continuous wave (FMCW) method, and a waveguide configured to provide a portion of light emitted from the light source to the photodetector as local oscillator light.

The LiDAR apparatus may further include an optical isolator provided on a light path between the light source and the root switch, and the optical isolator may be configured to pass light traveling from the light source toward the root switch and to block light traveling from the root switch toward the light source.

The light transmission/reception optical system may include a beam expander configured to increase a beam diameter of light output from switches among the plurality of switches provided in the plurality of terminal nodes, a flat lens configured to collimate light output from the beam expander, and an antenna configured to emit light output from the flat lens to the outside of the LiDAR apparatus and to transmit light from the outside to the flat lens.

The antenna may have a periodic grating pattern and a curved shape such that light output from the flat lens is incident perpendicularly to a light incident surface of the antenna.

The LiDAR apparatus may further include a plurality of waveguides configured to provide an optical connection between the plurality of switches, the light source, the photodetector, and the light transmission/reception optical system.

The LiDAR apparatus may further include a substrate, and the plurality of switches, the light source, the photodetector, the light transmission/reception optical system, and the plurality of waveguides may be provided on the substrate.

According to another most general aspect of an example embodiment, there is provided a light detection and ranging (LiDAR) apparatus including a plurality of switches connected in a binary tree structure, a light source connected to a root switch, from among the plurality of switches, provided at a root node of the binary tree structure, a photodetector connected to the root switch, a light transmission/reception optical system connected to a plurality of terminal switches, from among the plurality of switches, provided at a plurality of terminal nodes of the binary tree structure, the light transmission/reception optical system being configured to transmit light to an outside of the LiDAR apparatus or receive light from the outside, and a plurality of waveguides configured to provide an optical connection between the plurality of switches, the light source, the photodetector, and the light transmission/reception optical system, wherein the root switch is a 2×2 switch including a first upstream side port, a second upstream side port, a first downstream side port, and a second downstream side port, and wherein the plurality of switches, the light source, the photodetector, the light transmission/reception optical system, and the plurality of waveguides are provided on a substrate.

### BRIEF DESCRIPTION OF THE DRAWINGS

The above and/or other aspects, features, and advantages of example embodiments will be more apparent from the following description taken in conjunction with the accompanying drawings, in which:
FIG. 1 is a diagram showing a configuration and operation of a LiDAR apparatus according to an example embodiment;
FIG. 2 is a perspective view of the LiDAR apparatus shown in FIG. 1;
FIG. 3 is a diagram illustrating another operation of a LiDAR apparatus for steering a beam by using a plurality of switches according to an example embodiment;
FIG. 4 is a diagram showing the configuration of a single 2×2 switch according to an example embodiment in more detail;
FIGS. 5A and 5B are graphs showing operation characteristics of first and second electro-optic elements of the switch shown in FIG. 4;
FIGS. 6A, 6B, and 6C are diagrams illustrating an operation state of a switch according to a phase difference between the first electro-optic element and the second electro-optic element in the switch according to an example embodiment;
FIG. 7 is a timing diagram showing transmission light and reception light by the LiDAR apparatus shown in FIG. 1;
FIG. 8 is a diagram showing a configuration of a LiDAR apparatus according to another example embodiment;
FIG. 9 is a timing diagram showing transmission light and reception light by the LiDAR apparatus shown in FIG. 8;
FIG. 10 is a diagram showing a configuration of a LiDAR apparatus according to another example embodiment;
FIG. 11 is a timing diagram showing transmission light and reception light by the LiDAR apparatus shown in FIG. 10;
FIG. 12 is a diagram showing a configuration of a LiDAR apparatus according to another example embodiment;
FIG. 13 is a timing diagram showing transmission light and reception light by the LiDAR apparatus shown in FIG. 12;
FIG. 14 is a timing diagram showing a periodic calibration method according to an example embodiment;
FIG. 15 is a timing diagram showing a calibration method based on a signal-to-noise ratio according to an example embodiment; and
FIG. 16 shows a lookup table referenced to control states of a plurality of switches according to an example embodiment.

### DETAILED DESCRIPTION

Example embodiments will be described in detail with reference to the accompanying drawings, wherein like reference numerals refer to like elements throughout. In this regard, the example embodiments may have different forms and should not be construed as being limited to the descriptions set forth herein. Accordingly, the example embodiments are merely described below, by referring to the figures, to explain aspects.

As used herein, the term "and/or" includes any and all combinations of one or more of the associated listed items. Expressions such as "at least one of," when preceding a list of elements, modify the entire list of elements and do not modify the individual elements of the list. For example, the expression, "at least one of a, b, and c," should be understood as including only a, only b, only c, both a and b, both a and c, both b and c, or all of a, b, and c.

Hereinafter, a light detection and ranging (LiDAR) apparatus having an improved signal-to-noise ratio will be described in detail with reference to the accompanying drawings. In the drawings, like reference numerals denote like elements and sizes of constituent elements may be exaggerated for convenience of explanation and clarity. The example embodiments are capable of various modifications and may be embodied in many different forms.

It will be understood that when an element or layer is referred to as being "on" or "above" another element or layer, the element or layer may be directly on another element or layer or intervening elements or layers. Singular forms are intended to include the plural forms as well, unless the context clearly indicates otherwise. It should be understood that, when a part "comprises" or "includes" an element in the specification, unless otherwise defined, it is not excluding other elements but may further include other elements.

In the specification, the term "above" and similar directional terms may be applied to both singular and plural. With respect to operations that constitute a method, the operations may be performed in any appropriate sequence unless the sequence of operations is clearly described or unless the context clearly indicates otherwise. The operations may not necessarily be performed in the order of sequence.

Also, in the specification, the term "units" or "...modules" denote units or modules that process at least one function or operation, and may be realized by hardware, software, or a combination of hardware and software.

Connections or connection members of lines between components shown in the drawings illustrate functional connections and/or physical or circuit connections, and the connections or connection members can be represented by replaceable or additional various functional connections, physical connections, or circuit connections in an actual apparatus.

The use of any and all examples, or exemplary language provided herein, is intended merely to better illuminate the inventive concept and does not pose a limitation on the scope of the inventive concept unless otherwise claimed.

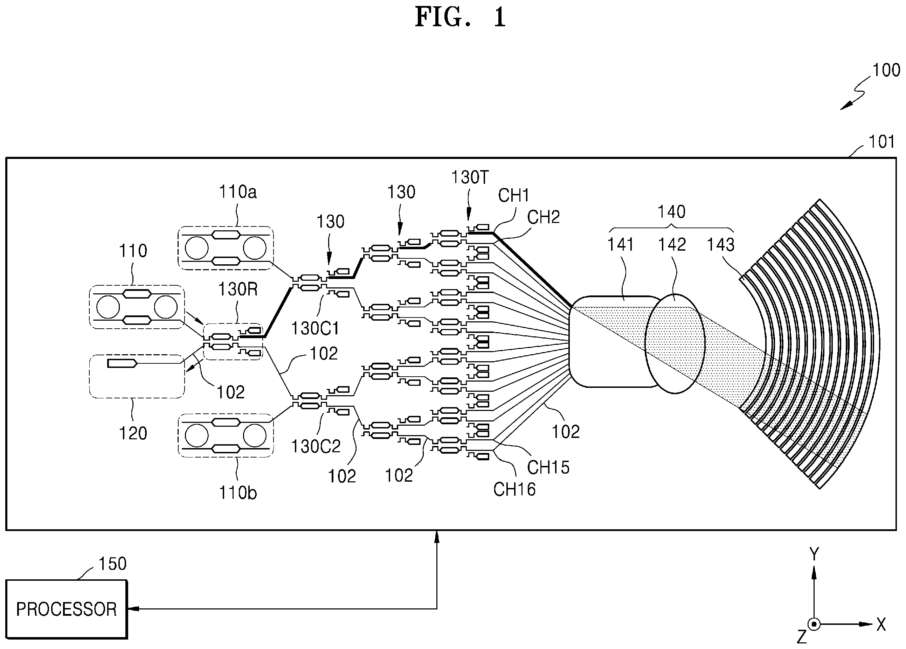

FIG. 1 is a diagram showing a configuration and operation of a light detection and ranging (LiDAR) apparatus 100 according to an example embodiment. Referring to FIG. 1, the LiDAR apparatus 100 according to an example embodiment includes a plurality of switches 130 connected by a binary tree structure, a light source 110 configured to generate light having a predetermined wavelength, a light transmission/reception optical system 140 configured to emit light generated from the light source 110 to the outside of the LiDAR apparatus100 and to receive light from the outside, and a photodetector 120 configured to detect light received by the light transmission/reception optical system 140. The LiDAR apparatus 100 further also includes at least one processor 150 configured to control operations of the light source 110, the photodetector 120, and the plurality of switches 130. In addition, the LiDAR apparatus 100 may further include a plurality of waveguides 102 that provide an optical connection between the light source 110, the photodetector 120, the plurality of switches 130, and the light transmission/reception optical system 140.

The light source 110, the photodetector 120, the plurality of switches 130, the light transmission/reception optical system 140, and the plurality of waveguides 102 may be integrated in one chip. For example, the light source 110, the photodetector 120, the plurality of switches 130, the light transmission/reception optical system 140, and the plurality of waveguides 102 may be included in one optical integrated circuit. To this end, the LiDAR apparatus 100 may further include a substrate 101. The light source 110, the photodetector 120, the plurality of switches 130, the light transmission/reception optical system 140, and the plurality of waveguides 102 may be arranged on one substrate 101. In this case, the LiDAR apparatus 100 may be highly miniaturized in the form of a chip.

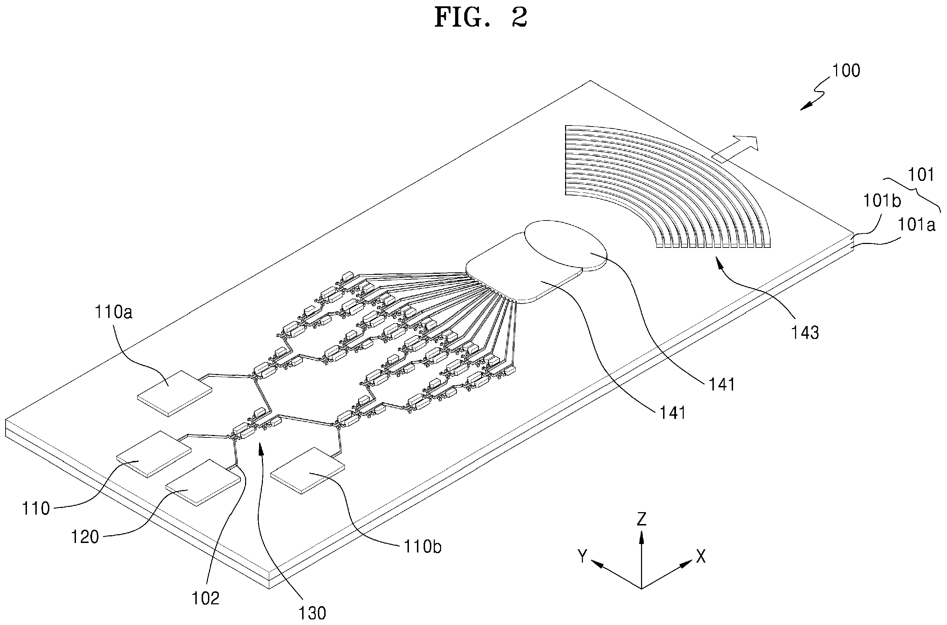

For example, FIG. 2 is a schematic perspective view showing the LiDAR apparatus 100 shown in FIG. 1. Referring to FIG. 2, the light source 110, the photodetector 120, the plurality of switches 130, the light transmitting/reception optical system 140, and the plurality of waveguides 102 may be formed on one substrate 101. The substrate 101 may include a semiconductor base 101a and an oxide layer 101b on the semiconductor base 101a. The light source 110, the photodetector 120, and the plurality of switches 130, the light transmission/reception optical system 140, and the plurality of waveguide 102 may be formed on the oxide layer 101b.

The semiconductor base 101a may include, for example, silicon (Si). However, the material of the semiconductor base 101a is not necessarily limited to silicon, and various wafer materials used in the semiconductor manufacturing process may be used as the semiconductor base 101a.

The oxide layer 101b including a transparent insulating oxide may act as a lower clad with respect to the light source 110, the optical detector 120, the plurality of switches 130, the light transmission/reception optical system 140, and the plurality of waveguides 102 arranged thereon. For example, the oxide layer 101b may perform a role of preventing light leakage into a lower side of each of the light source 110, the photodetector 120, the plurality of switches 130, the light transmission/reception optical system 140, and the plurality of waveguides 102. The transparent insulating oxide material of the oxide layer 101b may be, for example, silicon oxide (SiO₂), but embodiments are not necessarily limited thereto. The oxide material of the oxide layer 101b may include any transparent material having a refractive index lower than those materials used in the light source 110, the optical detector 120, the plurality of switches 130, the light transmission/reception optical system 140, and the plurality of waveguides 102. Here, the transparent material may be a transmissive material with respect to a wavelength band of light emitted from the light source 110.

An upper clad may further be formed on the light source 110, the photodetector 120, the plurality of switches 130, the light transmission/reception optical system 140, and the plurality of waveguides 102. The oxide layer 101b and the upper clad may play a role of confining light in a region between the oxide layer 101b and the upper clad so that light is not leak to the outside of the LiDAR apparatus 100. To this end, the upper clad may be formed to completely cover the optical elements, that is, the light source 110, the photodetector 120, the plurality of switches 130, the light transmission/reception optical system 140, and the plurality of waveguides 102 except for an antenna 143 to be described later. The upper clad may include any material having a refractive index lower than those materials used in the light source 110, the photodetector 120, the plurality of switches 130, the light transmission/reception optical system 140, and the plurality of waveguides 102. For example, the upper clad may include silicon oxide (SiO₂).

The oxide layer 101b may be stacked over an entire upper surface of the semiconductor base 101a. In this case, the substrate 101 may be a single Si on insulator (SOI) substrate. However, the substrate 101 is not necessarily limited to the SOI substrate. The oxide layer 101b may be locally arranged under the optical elements, such as the light source 110, the photodetector 120, the plurality of switches 130, the light transmission/reception optical system 140, and the plurality of waveguides 102. In this case, the substrate 101 may be a buried oxide (BOX) substrate formed by locally etching an upper surface of bulk silicon and filling the etched upper surface of the bulk silicon with the oxide layer 101b.

The light source 110, the photodetector 120, and the plurality of switches 130 arranged on the oxide layer 101b may include an active layer including, for example, a silicon-based semiconductor material, a Group III/V compound semiconductor material, or a Group II/VI compound semiconductor. The light transmission/reception optical system 140 and the plurality of waveguides 102 may also include a light-transmitting material having a greater refractive index than that of the oxide layer 101b. For example, the light transmission/reception optical system 140 and the plurality of waveguides 102 may include silicon (Si), silicon nitride (SiN), a Group III/V compound, or a Group II/VI compound.

In FIGS. 1 and 2, the light source 110 and the photodetector 120 are arranged on the substrate 101, but embodiments are not limited thereto. According to design and/or manufacturing needs, the light source 110 and the photodetector 120 may be fixed on separate supports, and the light source 110 and the photodetector 120 may be optically connected to the waveguide 102 on the substrate 101 through an optical fiber etc.

Referring again to FIG. 1, the light source 110 may be configured to output pulse light at regular time intervals or to output continuous wave light in accordance with the control of the processor 150. In addition, the light source 110 may be configured to emit light in an infrared band invisible to the human eye. For example, the light source 110 may be configured to emit light having a partial wavelength band selected from a band in a range, for example, from about 800 nm to about 2,000 nm. The light source 110 may be configured to adjust an emission wavelength according to the control of the processor 150. For example, the light source 110 may be a tunable wavelength laser diode (TLD). According to another example embodiment, the light source 110 may include a closed-curve waveguide resonator. In this case, the processor 150 may adjust a resonant wavelength of the closed-curve waveguide resonator, and thus, a wavelength of light output from the light source 110 may be adjusted. For example, a resonant wavelength of the closed-curve waveguide resonator may be adjusted by optically adjusting a length of a resonator of the closed-curve waveguide resonator of the light source 110 by using a phase modulation element or the like.

The photodetector 120 may include a photodiode, a photodiode array, a phototransistor, or a phototransistor array that receives light and generates a photocurrent according to the intensity of light. For example, the photodetector 120 may include an avalanche photodiode (APD).

The plurality of switches 130 are arranged in a binary tree structure in which the number of switches is doubled in a first direction (an X direction). The plurality of switches 130 may be particularly arranged in a perfect binary tree structure, and one switch 130 may be arranged at each node of the binary tree. To this end, each switch 130 may have two downstream side ports. Two different switches 130 may each be optically connected to the two downstream side ports of each of the switches 130 via the waveguide 102. Here, the downstream side direction indicates an +X direction in which light travels from the light source 110 toward the light transmission/reception optical system 140, and the upstream side direction indicates an -X direction in which light travels from the light transmission/reception optical system 140 toward the light detector 120.

The light transmission/reception optical system 140 is arranged on a downstream side of terminal switches 130T located at terminal nodes of the binary tree structure among the plurality of switches 130. The light transmission/reception optical system 140 may be optically connected to downstream side ports of the plurality of terminal switches 130T through the plurality of waveguides 102. Light output from the terminal switches 130T is emitted to the outside of the LiDAR apparatus 100 through the light transmission/reception optical system 140. An azimuth direction of light emitted to the outside of the LiDAR apparatus 100 may be determined according to a second direction (a Y direction) position of the downstream side port of the terminal switch 130T from which light is output among the plurality of terminal switches 130T. Here, the second direction is a direction perpendicular to the first direction. In this respect, the downstream side ports of the plurality of terminal switches 130T may be channels of the LiDAR apparatus 100.

When a level at which the root node of the binary tree structure is located is referred to as level 0 and there are N levels, 2^{N} terminal switches 130T may exist in the terminal node. In this case, the number of channels is 2^{N+1}, and the channels may be arranged in the second direction (the Y direction). In FIG. 1, although it is depicted that only 16 channels (CH1, CH2,..., CH15, CH16) are arranged in the second direction (the Y direction) as an example, but a greater number of channels may be present. For example, if the binary tree may have 10 levels in the first direction (the X direction), the number of terminal switches 130T located at the terminal node of the binary tree is 1,024, and the number of channels of the LiDAR apparatus 100 arranged in the second direction (the Y direction) may be 2,048. However, embodiments are not limited thereto.

Among the plurality of switches 130, a root switch 130R located at a root node of the binary tree structure is a 2×2 switch having two upstream side ports and two downstream side ports. The remaining switches 130 may also be 2x2 switches as well as the root switch 130R. According to another example embodiment, the remaining switches 130 except for the root switch 130R may be an 1×2 switch having one upstream side port and two downstream side ports.

The light source 110 and the photodetector 120 may be optically connected to the two upstream side ports of the root switch 130R through the waveguide 102, respectively. Light generated from the light source 110 passes through the root switch 130R and proceeds in the +X direction, which is a downstream side direction, and according to a switching operation of the plurality of switches 130 arranged in the binary tree structure, is transmitted to the light transmission/reception optical system 140 through one channel of any one terminal switch among the plurality of terminal switches 130T, for example, through any one channel among a plurality of channels. To this end, the processor 150 individually controls the plurality of switches 130 to allow light to travel along a selected specific path from the root switch 130R to the terminal switches 130T.

In addition, while receiving light from the outside, light received by the light transmission/reception optical system 140 travels in the -X direction, which is an upstream side direction from the terminal switches 130T to the root switch 130R, along a path opposite to a transmission path. The processor 150 may control the root switch 130R so that light input to the root switch 130R along an upstream side direction proceeds only toward the photodetector 120.

The processor 150 may control operations of the light source 110, the photodetector 120, and the plurality of switches 130, and, based on a signal detected by the photodetector 120, may extract distance information or speed information regarding an external object via, for example, a time of flight (TOF) method or a frequency modulated continuous wave (FMCW) method. The processor 150 may be implemented as, for example, a dedicated semiconductor chip, or may be implemented in software that may be executed on a computer and stored in a recording medium. Also, according to another example, the processor 150 may be implemented as a programmable logic processor (PLC) or field-programmable gate array (FPGA) or the like. The processor 150 may include an application specific integrated circuit (ASIC), a dedicated microprocessor, a microprocessor, a general purpose processor, or the like. In addition, the processor 150 may be mounted on one substrate 101 together with the light source 110, the photodetector 120, the plurality of switches 130, and the light transmission/reception optical system 140, or may be mounted on separate substrates.

The light transmission/reception optical system 140 is configured to transmit light to a free space outside the LiDAR apparatus 100 or to receive light from the free space. The optical transmission optical system 140 may include a beam expander 141 configured to increase a beam diameter of light output from the terminal switches 130T located in a plurality of terminal nodes, a flat lens 142 configured to collimate light output from the beam expander 141, and an antenna 143 configured to emit light output from the flat lens 142 to the outside of the LiDAR apparatus 100 and transmit light from the outside to the flat lens 142.

The plurality of waveguides 102 may be connected between the beam expander 141 and the terminal switches 130T. The beam expander 141 may include the same material as the plurality of waveguides 102 and may be extended integrally with the plurality of waveguides 102. A width of the beam expander 141 in the second direction (the Y direction) may be greater than a width of each of the plurality of waveguides 102 in the second direction (the Y direction). For example, all of the plurality of waveguides 102 respectively connected to the plurality of channels CH1, CH2,..., CH15, CH16 which are downstream side ports of the plurality of terminal switches 130T may be connected to one side of the beam expander 141 in the second direction (the Y direction). Accordingly, a beam diameter of light incident on the beam expander 141 through one of the waveguides 102 gradually increases while proceeding in the +X direction.

The flat lens 142 is configured to convert diverged light formed by the beam expander 141 into a parallel beam. For example, the flat lens 142 may be a flat cylinder lens having positive (+) refractive power.

The antenna 143 may include a plurality of grating pattern groups. The plurality of grating pattern groups of the antenna 143 may have a periodic grating pattern. A traveling direction of light emitted through the antenna 143 may be determined by a period of the grating pattern, a height of the grating pattern, a space between the grating patterns, an incidence angle of light incident on the antenna 143, a wavelength of the light incident on the antenna 143, etc. The antenna 143 may also have a curved shape so that light output from the flat lens 142 is perpendicularly incident on a light incident surface of the antenna 143. Then, the light traveling inside the antenna 143 may undergo the same grating pattern period regardless of an incident location on the light incident surface of the antenna 143.

Because the plurality of waveguides 102 respectively connected to the plurality of channels CH1, CH2,..., CH15, CH16 are connected to a side surface of the beam expander 141 at different positions and at different angles in the second direction (the Y direction), light may be steered in an azimuth direction by selecting any one of the plurality of channels CH1, CH2,..., CH15, CH16. For example, as shown in FIG. 1, when the processor 150 selects the first channel CH1 by controlling the plurality of switches 130, light output from the light source 110 is incident on the beam expander 141 through the first channel CH1. Then, the light is incident obliquely on the beam expander 141 in the -Y direction, and may be transmitted obliquely in the - Y direction through the flat lens 142 and the antenna 143. In addition, reception light that is reflected by an external object and incident on the antenna 143 in an opposite direction along the same path as the transmission light may be incident on the first channel CH1 again through the flat lens 142 and the beam expander 141.

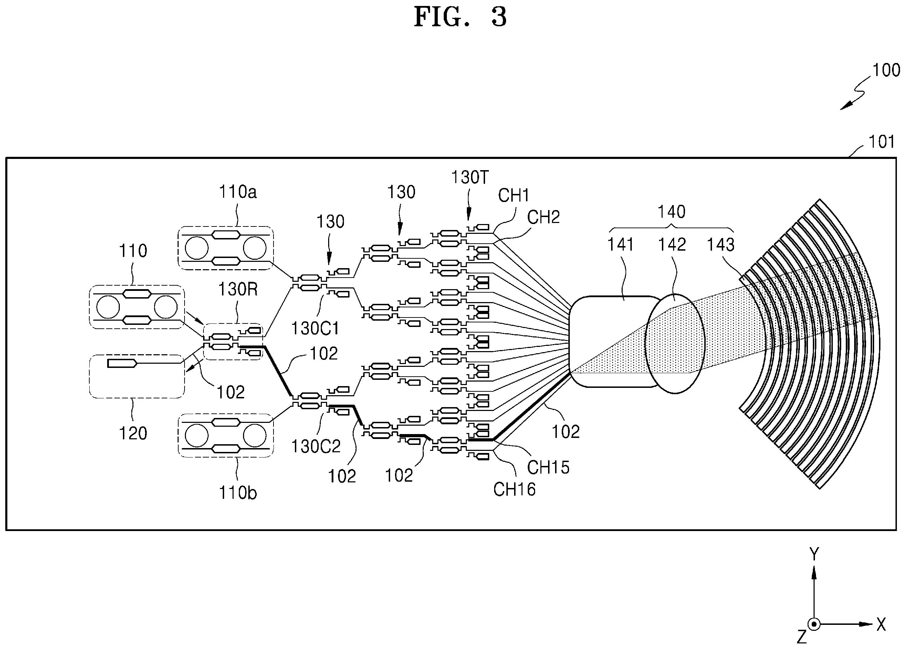

FIG. 3 is a diagram showing another operation of the LiDAR apparatus 100 for steering a beam by using a plurality of switches according to an example embodiment. Referring to FIG. 3, when the processor 150 selects the 15^{th} channel CH15 by controlling the plurality of switches 130, light output from the light source 110 is incident on the beam expander 141 through the 15^{th} channel CH15. Then, the light is incident on the beam expander 141 obliquely in the +Y direction, and may be transmitted obliquely in the +Y direction through the flat lens 142 and the antenna 143. In addition, reception light that is reflected by an external object and incident on the antenna 143 in an opposite direction along the same path as the transmission light may be incident on the 15^{th} channel CH15 again through the flat lens 142 and the beam expander 141.

Light may be steered in an elevation angle direction (a Z direction) by adjusting a wavelength of light output from the light source 110. The correlation between the wavelength of light and the elevation angle at which light is emitted may be determined by a structure of the grating pattern group of the antenna 143. The processor 150, after steering light in an azimuth direction by sequentially selecting from the first channel CH1 to the 16^{th} channel CH16, changes a wavelength of the light source 110, and then, may steer the light in the azimuth direction by sequentially selecting again from the first channel CH1 to the 16^{th} channel CH16.

In the case of the LiDAR apparatus 100 according to an example embodiment described above, because light is steered in a manner of selecting one channel among a plurality of channels by using the plurality of switches 130 connected in a binary tree structure, power consumption may be reduced compared to an optical phase array (OPA) method. According to the OPA method, a voltage must be applied to all phase shifters, but in the example embodiment, a voltage is applied only to switches that are located in a path through which light travels. For example, if there are 256 channels, in the OPA method, a voltage is applied to the 256 phase shifters, while in the example embodiment, a voltage may be applied only to log₂256 = 8 switches. Generally, when 2^{N} channels are present, in the example embodiment, light may be steered by operating only N switches.

In addition, in the example embodiment, a fill factor occupied by an antenna may be increased, and thus, light reception efficiency may be improved. In the case of the OPA method, a ratio of an antenna in a width in the second direction (the Y direction) is less than 30%, but in the case of the example embodiment, because most of the substrate 101 may be filled with the antenna 143 in the second direction (the Y direction), the size of a light receiving surface is increased, and thus, the light reception efficiency may be improved compared to the OPA method.

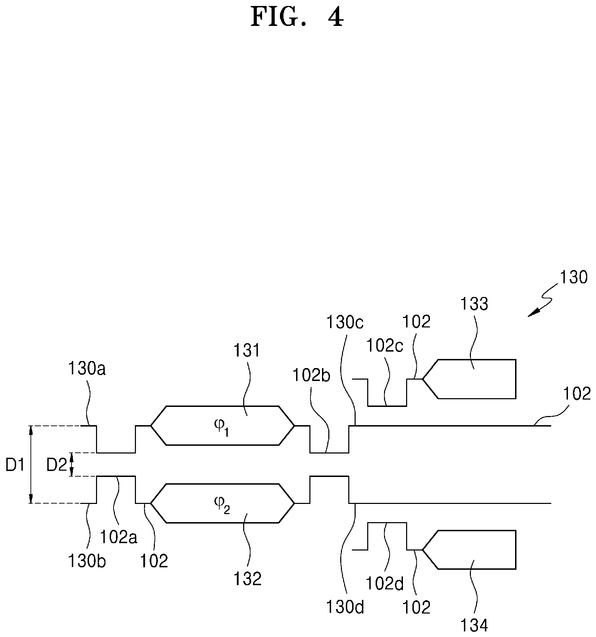

In addition, in the example embodiment, one LiDAR apparatus 100 may perform both a transmission operation and a reception operation with only one antenna 143 by using a 2×2 switch having two ports on the upstream side and two ports on the downstream side, respectively. FIG. 4 is a diagram showing a configuration of a single 2×2 switch according to an example embodiment in more detail.

Referring to FIG. 4, the switch 130 may include a first upstream side port 130a, a second upstream side port 130b, a first downstream side port 130c, a second downstream side port 130d, a first coupler 102a that optically couples the first upstream side port 130a to the second upstream side port 130b, and a second coupler 102b that optically couples the first downstream side port 130c to the second downstream side port 130d. A distance D1 between the first upstream side port 130a and the second upstream side port 130b is greater than a wavelength of light generated from the light source 110 so that light passing through the first upstream side port 130a and light passing through the second upstream side port 130b do not interfere with each other. Similarly, a distance D2 between the first downstream side port 130c and the second downstream side port 130d is greater than a wavelength of the light generated from the light source 110 so that light passing through the first downstream side port 130c and light passing through the second downstream side port 130d do not interfere with each other.

The first coupler 102a may be formed by bending a portion of the waveguide 102 that forms the first upstream side port 130a and a portion of the waveguide 102 that forms the second upstream side port 130b so that the distance D2 between the first upstream side port 130a and the second upstream side port 130b is less than a wavelength of light generated from the light source 110. The second coupler 102b may also be formed by bending a portion of the waveguide 102 that forms the first downstream side port 130c and a portion of the waveguide 102 that forms the second downstream side port 130d so that the distance between the first downstream side port 130c and the second downstream side port 130d is less than a wavelength of light generated from the light source 110. In regions of the first and the second couplers 102a and 102b having a distance less than a wavelength of light, an evanescent coupling occurs, and thus, light may be exchanged with little loss.

The switch 130 may also include a first electro-optic element 131 arranged between the first upstream side port 130a and the first downstream side port 130c and a second electro-optic element 132 arranged between the second upstream side port 130b and the second downstream side port 130d. The first and second electro-optic elements 131 and 132 may be configured to modulate a phase of input light for switching operation of the switch 130. The first and second electro-optic elements 131 and 132 may also be configured to amplify the input light. The first and second electro-optic elements 131 and 132 may include a semiconductor material, for example, a Group III/V compound semiconductor or a Group II/VI compound semiconductor.

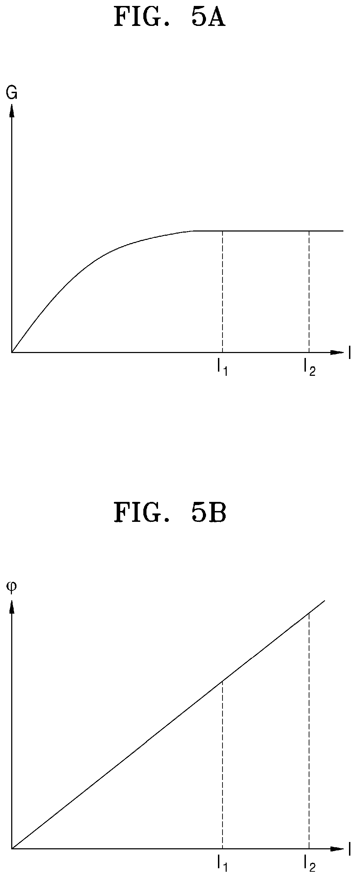

The first and second electro-optic elements 131 and 132 may amplify input light and modulate a phase of the input light according to an applied current. For example, the first and second electro-optic elements 131 and 132 may modulate a phase to a different phase while amplifying light with the same gain. For example, FIGS. 5A and 5B are graphs showing operation characteristics of the first and second electro-optic elements 131 and 132 of the switch shown in FIG. 4. FIG. 5A shows a gain change of the first and second electro-optic elements 131 and 132 according to an input current, and FIG. 5B shows a phase change of the first and second electro-optic elements 131 and 132 according to the input current. Referring to FIG. 5A, when the intensity of the input current increases, a gain saturation occurs in the first and second electro-optic elements 131 and 132, and even if the intensity of the input current increases, the gain is not further increased. Referring to FIG. 5B, there is a relatively linear relationship between the input current and the phase. Accordingly, if the input current is adjusted in a gain saturation section, the first and second electro-optic elements 131 and 132 may modulate a phase of light differently while amplifying input light with substantially the same gain.

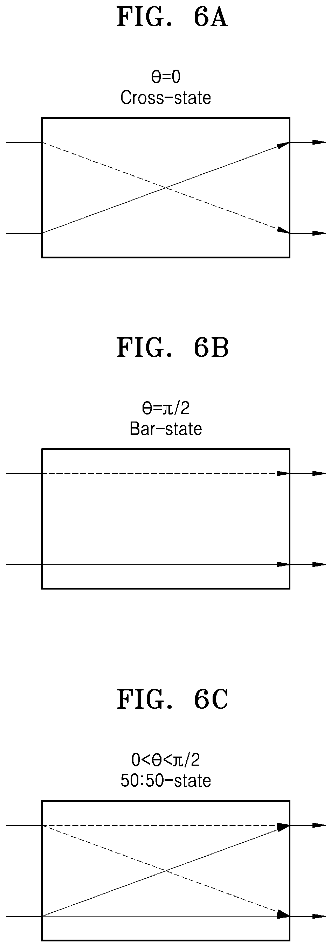

A switching state of the switch 130, in other words, a path of light passing through the switch 130 may be determined according to the phase of light modulated by the first and second electro-optic elements 131 and 132. FIGS. 6A to 6C show operating states of the switch 130 according to a phase difference between the first and second electro-optic elements 131 and 132 in the switch 130. If a phase of light by the first electro-optic element 131 is referred to as Φ₁ and a phase of light by the second electro-optic element 132 is referred to as Φ₂, the operating state of the switch 130 may be determined according to 8 = (Φ₁ - Φ₂)/2, which is a half of the phase difference between Φ₁ and Φ₂.

For example, referring to FIG. 6A, when a phase difference between light amplified by first electro-optic element 131 and light amplified by the second electro-optic element 132 is 0 (θ = 0), the switch 130 is operated in a first state (a cross-state) in which light input to the first upstream side port 130a is transmitted to the second downstream side port 130d and light input to the second upstream side port 130b is transmitted to the first downstream side port 130c. Referring to FIG. 6B, when the phase difference between light amplified by the first electro-optic element 131 and light amplified by the second electro-optic element 132 is π (θ = π/2), the switch 130 is in a second state (a bar-state) in which light input to the first upstream side port 130a is transmitted to the first downstream side port 130c and light input to the second upstream side port 130b is transmitted to the second downstream side port 130d. Referring to FIG. 6C, when a phase difference between light amplified by the first electro-optic element 131 and light amplified by the second electro-optic element 132 is greater than zero and less than π (0<θ<π/2), the switch 130 may be in a third state (a 50:50 state) in which light input to the first upstream side port 130a is transmitted to both the first and second downstream side ports 130c and 130d and light input to the second upstream side port 130b is transmitted to both the first and second downstream side ports 130c and 130d. In FIGS. 6A to 6C, it is depicted a case when light travels in a downstream direction, but the same switching state of the switch 130 described above may be applied to a case when the light travels in an upstream side direction.

The configuration and operation characteristics of a 2×2 switch having two ports on the upstream side and two ports on the downstream side have been described. However, a 1×2 switch may have similar configuration and operation characteristics to the 2×2 switch described above except that the 1x2 switch has one port on the upstream side. For example, even in the case of the 1x2 switch, the first and second electro-optic elements 131 and 132 may amplify light, and a traveling path of light may be selected according to a phase of the light amplified by the first and second electro-optic elements 131 and 132. For example, according to a phase of light amplified by the first and second electro-optic elements 131 and 132, the 1×2 switch may be operated in a first state in which light is transmitted to the first downstream side port 130c, a second state in which light is transmitted to the second downstream side ports 130d, and a third state in which light is transmitted to both the first and second downstream side ports 130c and 130d.

In the example shown in FIG. 1, when light generated from the light source 110 is transmitted to the first channel CH1, the processor 150 may control the root switch 130R to be operated in the second state by controlling a current applied to the first and second electro-optic elements 131 and 132 of the root switch 130R. Then, all switches 130 in a path of light from after the root switch 130R to the terminal switch 130T may be operated in the first state. In addition, when light generated from the light source 110 is transmitted to the 16^{th} channel CH16, the processor 150 may control all switches 130 in the path of light from the root switch 130R to the terminal switch 130T to be operated in the second state.

The LiDAR apparatus 100 according to the example embodiment may operate at high speed by electro-optically controlling the switch 130 by using the first and second electro-optic elements 131 and 132 capable of high-speed operation. For example, a frame rate at which a scanning operation of one frame is performed from the first channel CH1 to the 16^{th} channel CH16 may increase. The disclosed LiDAR apparatus 100 may also simultaneously perform a switching operation and a light amplification operation only with the first and second electro-optic elements 131 and 132, thereby improving the sensitivity of the LiDAR apparatus 100.

In addition, the LiDAR apparatus 100 may further include an auxiliary light source in preparation for failure or disorder of the light source 110. Referring to FIG. 1, the LiDAR apparatus 100 may further include a first auxiliary light source 110a and a second auxiliary light source 110b. The first auxiliary light source 110a and the second auxiliary light source 110b may be respectively connected to two switches, that is, first and second switches 130C1 and 130C2 arranged at two child nodes of the root node in the binary tree structure. To this end, both of the first switch 130C1 connected to the first downstream side port 130c and the second switch 130C2 connected to the second downstream side port 130d of the root switch 130R may be 2×2 switches including the first upstream side port 130a, the second upstream side port 130b, the first downstream side port 130c, and the second downstream side port 130d. The second upstream side port 130b of the first switch 130C1 is connected to the first downstream side port 130c of the root switch 130R, and the first auxiliary light source 110a may be connected to the first upstream side port 130a of the first switch 130C1. In addition, the first upstream side port 130a of the second switch 130C2 is connected to the second downstream side port 130d of the root switch 130R, and the second auxiliary light source 110b may be connected to the second upstream side port 130b of the second switch 130C2.

When a failure or disorder occurs in the light source 110, light may be provided through the first auxiliary light source 110a to the first channel CH1 to the eighth channel connected to the child nodes of a node in which the first switch 130C1 is arranged, and light may be provided through the second auxiliary light source 110b to the ninth channel to 16^{th} channel CH16 connected to the child nodes of the node in which the second switch 130C2 is arranged. In this case, received light may be transmitted to the photodetector 120 through the root switch 130R. In this way, it is possible to further arrange an auxiliary light source in the case of failure of the main light source by using a 2x2 switch.

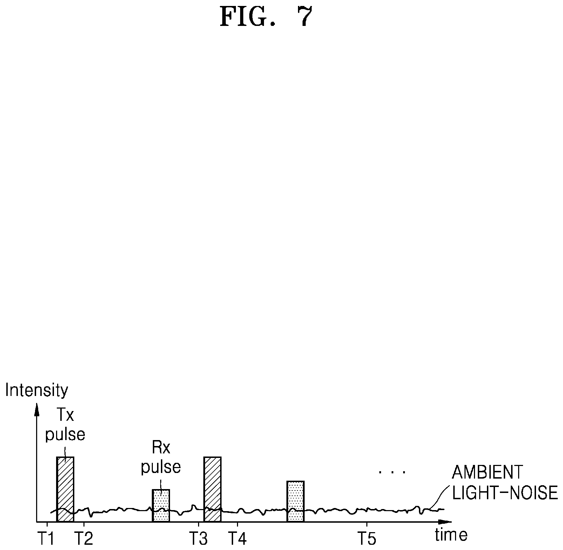

The LiDAR apparatus 100 shown in FIG. 1 may be operated to alternately perform optical transmission and optical reception in a time division multiplexing manner. For example, FIG. 7 is a timing diagram showing transmission light and reception light by the LiDAR apparatus 100 shown in FIG. 1. Referring to FIG. 7, the LiDAR apparatus 100 performs a transmission operation between times T1 and T2. Between times T1 and T2, the light source 110 may emit pulse light according to the control of the processor 150. The root switch 130R may be operated in a first state or a second state depending on the position of the channel that outputs light. The LiDAR apparatus 100 performs a reception operation between times T2 and T3. When performing a reception operation, the root switch 130R has a state opposite to the state of a transmission operation. For example, if the root switch 130R is in the first state while transmitting light, the root switch 130R is in the second state while receiving light, and if the root switch 130R is in the second state while transmitting light, the root switch 130R is in the first state while receiving light. The processor 150 may extract distance information about an external object based on a signal received from the photodetector 120 via, for example, a time of flight (TOF) method. Thereafter, light may be output through a subsequent channel between times T3 and T4, and a light reception operation may be performed between times T4 and T5.

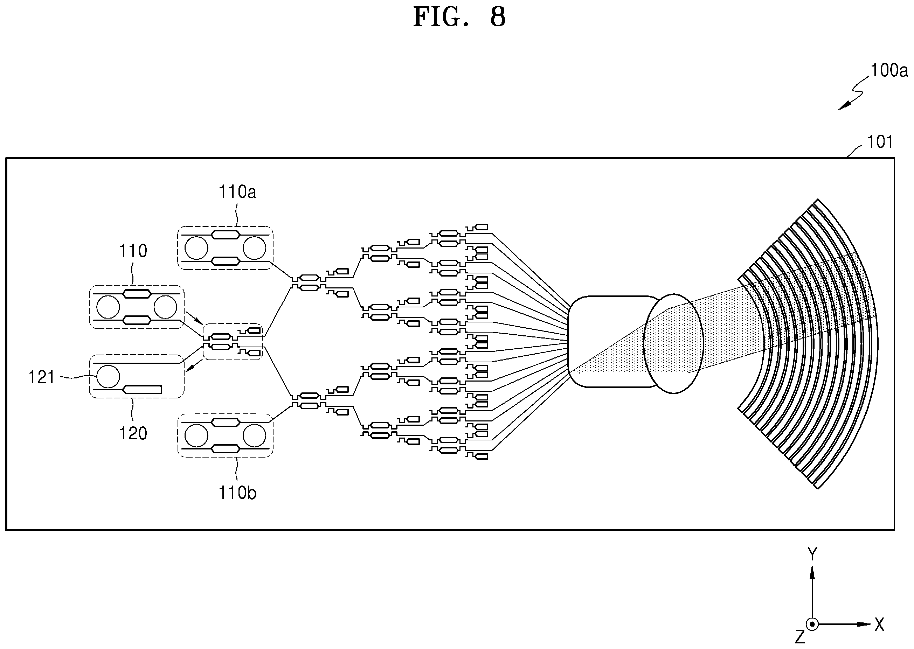

FIG. 8 is a diagram schematically showing a configuration of a LiDAR apparatus 100a according to another example embodiment. In the LiDAR apparatus 100 shown in FIG. 1, the photodetector 120 may receive ambient light-noise together. Such ambient light-noise may reduce a signal-to-noise ratio and reduce the sensitivity of the LiDAR apparatus 100. In order to prevent this problem, the LiDAR apparatus 100a shown in FIG. 8 may further include a bandpass filter 121 that passes only light of the same wavelength band as that of light emitted from the light source 110. In the LiDAR apparatus 100 shown in FIG. 1, the photodetector 120 is directly connected to the second upstream side port 130b of the root switch 130R, but in the LiDAR apparatus 100a shown in FIG. 8, the bandpass filter 121 may be directly connected to the second upstream side port 130b of the root switch 130R, and the photodetector 120 may be connected to an output terminal of the bandpass filter 121.

As described above, the light source 110 is a tunable light source, and light may be steered in an elevation angle direction by adjusting a wavelength of light output from the light source 110. Accordingly, the bandpass filter 121 may be configured to adjust a passing band according to the wavelength of light output from the light source 110. For example, the bandpass filter 121 may include a closed-curve waveguide resonator. The processor 150 may control a wavelength of light passing through the bandpass filter 121 by adjusting a resonance wavelength of the closed-curve waveguide resonator. For example, a resonance wavelength of the closed-curve waveguide resonator may be adjusted by optically adjusting a resonator length of the closed-curve waveguide resonator of the bandpass filter 121 by using a phase modulation element etc.

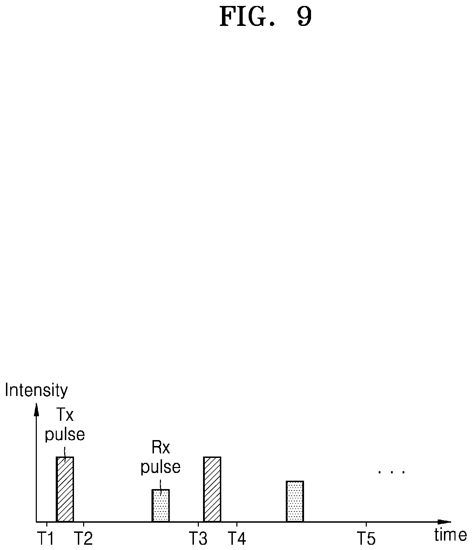

FIG. 9 is a timing diagram showing transmission light and reception light by the LiDAR apparatus 100a shown in FIG. 8. Referring to FIG. 9, it is possible to remove most of ambient light-noise by using the bandpass filter 121. The remaining configuration and operation of the LiDAR apparatus 100a shown in FIGS. 8 and 9 are the same as those described in FIGS. 1 and 7, and thus, the descriptions thereof will be omitted.

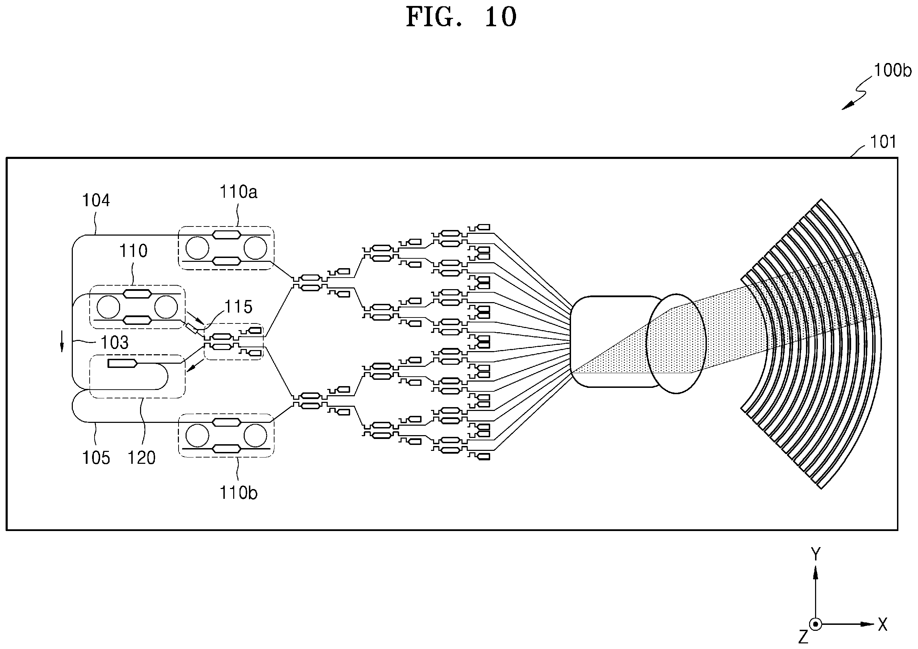

FIG. 10 is a diagram schematically showing a configuration of a LiDAR apparatus 100b according to another example embodiment. The LiDAR apparatuses 100 and 100a according to the example embodiments described above may extract only distance information about an external object via a TOF method. The LiDAR apparatus 100b shown in FIG. 10 may be configured to extract distance information and speed information with respect to an external object in a frequency modulated continuous wave (FMCW) method. Referring to FIG. 10, the LiDAR apparatus 100b may further include a first waveguide 103 for providing a portion of light output from the light source 110 to the photodetector 120 as local oscillator light. In addition, the LiDAR apparatus 100b may further include a second waveguide 104 for providing a portion of light output from the first auxiliary light source 110a to the photodetector 120 as local oscillator light, and a third waveguide 105 for providing a portion of light output from the second auxiliary light source 110b to the photodetector 120 as local oscillator light.

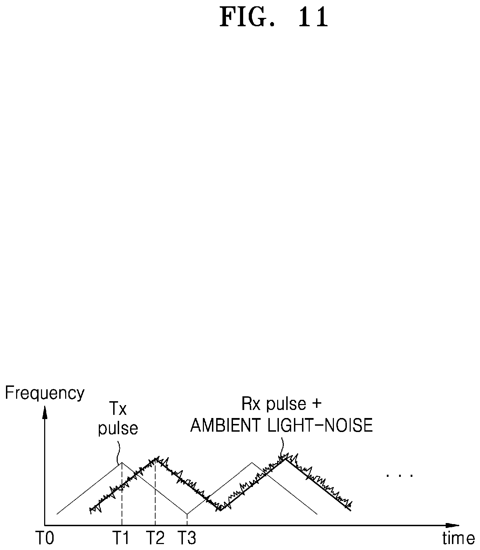

FIG. 11 is a timing diagram showing transmission light and reception light by the LiDAR apparatus 100b shown in FIG. 10. In particular, FIG. 11 shows a frequency component of transmission light and a frequency component of reception light according to a triangular FMCW method. Referring to FIG. 11, the transmission light and the reception light have a triangular shape frequency change in which a frequency is linearly increased and then, linearly decreased according to time. For example, the frequency of the transmission light increases linearly from time t0 to time T1, and decreases linearly from time t1 to time T3. There is a time delay by a predetermined time (T2 - T1) between a frequency peak of the transmission light and a frequency peak of the reception light, and there is a frequency difference between the frequency peak of the transmission light and the frequency peak of the reception light. The processor 150 may calculate a distance to an external object and a relative speed to the external object based on the time delay of the frequency peak and a difference of the frequency peak. In addition, the time delay of the frequency peak and the difference of the frequency peak may be calculated through interference light between local oscillator light and reception light measured in the photodetector 120.

In order to cause an interference between local oscillator light and reception light, the reception light may be continuously provided to the light detector 120 while the light source 110 emits light. To this end, the root switch 130R may be in a third state in which light input to the first downstream side port 130c is transmitted to both the first and second upstream side ports 130a and 130b, and light input to the second downstream side port 130c is transmitted to both the first and second upstream side ports 130a, 130b. In this case, in order to prevent the reception light from traveling backward toward the light source 110, the LiDAR apparatus 100b may further include an optical isolator 115 arranged on a light path between the light source 110 and the root switch 130R as illustrated in FIG. 10. The optical isolator 115 may pass light traveling from the light source 110 toward the root switch 130R and block light traveling from the root switch 130R toward the light source 110.

During performing the FMCW method, a difference between the minimum wavelength and the maximum wavelength of the frequency-modulated light when a frequency is modulated may be very small compared to the change in a wavelength when the light is steered in the elevation angle direction. For example, in a wavelength band of 1,310 nm, the elevation angle changes by about 2° when the wavelength is changed by 10 nm, and the wavelength change of frequency-modulated light in the FMCW method is about 0.006 nm. Therefore, a frequency modulation for the FMCW method may have little effect on an elevation angle of light steered to the outside.

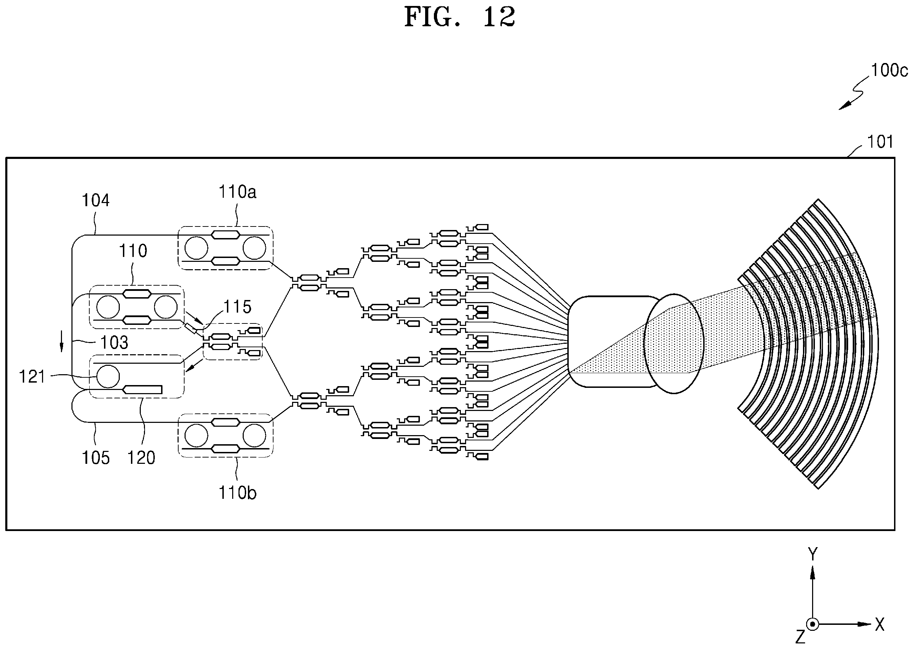

FIG. 12 is a diagram schematically showing a configuration of a LiDAR apparatus 100c according to another example embodiment. In the LiDAR apparatus 100c shown in FIG. 12, the photodetector 120 may receive ambient light-noise together. To prevent this problem, the LiDAR apparatus 100c shown in FIG. 12 may further include a bandpass filter 121 that passes only light in the same wavelength band as that of the light emitted from the light source 110. The processor 150 may adjust a passband of the bandpass filter 121 according to the wavelength of light output from the light source 110.

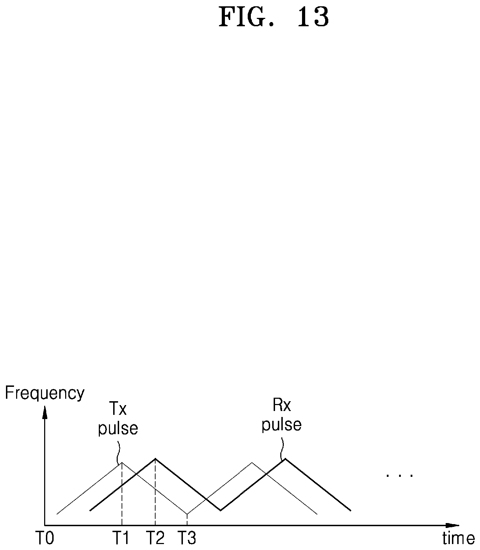

FIG. 13 is a timing diagram illustrating transmission light and the reception light by the LiDAR apparatus 100c shown in FIG. 12. Referring to FIG. 13, most of ambient light-noise may be removed by using the bandpass filter 121. The remaining configuration and operation of the LiDAR apparatus100c shown in FIGS. 12 and 13 are the same as those described with reference to FIGS. 10 and 11, and thus, the descriptions thereof will be omitted.

The operation condition of the first and second electro-optic elements 131 and 132 may vary depending on the change in the external environment, such as temperature. Accordingly, the plurality of switches 130 may be accurately operated by actively changing a current applied to the first and second electro-optic elements 131 and 132 according to changes in the external environment. To this end, referring to FIG. 4, a monitoring photodetector may further be arranged on the downstream side port of each switch 130. For example, each switch 130 may further include a first monitoring photodetector 133 for measuring the intensity of light passing through the first downstream side port 130c and a second monitoring photodetector 134 for measuring the intensity of light passing through the second downstream side port 130d.

In addition, each switch 130 may further include a third coupler 102c that is optically coupled to the first downstream side port 130c to provide a portion of light passing through the first downstream side port 130c to the first monitoring photodetector 133 and a fourth coupler 102d that is optically coupled to the second downstream side port 130d to provide a portion of light passing through the second downstream side port 130d to the second monitoring photodetector 134. The third coupler 102c may be formed by bending a portion of the waveguide 102 that forms the third coupler 102c so that a distance between the waveguide 102 that forms the third coupler 102c and the first downstream side port 130c is less than a wavelength of light generated from the light source 110. The fourth coupler 102d may also be formed by bending a portion of the waveguide 102 that forms the fourth coupler 102d so that a distance between the waveguide 102 that forms the fourth coupler 102d and the second downstream side port 130d is less than a wavelength of light generated from the light source 110.

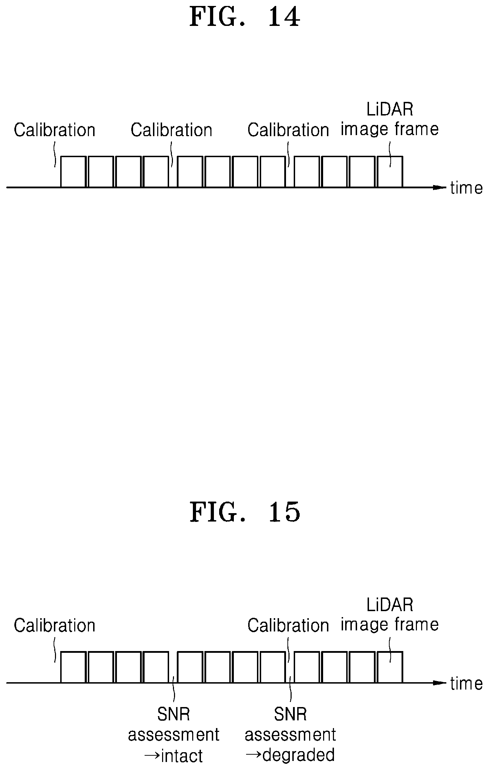

The processor 150 may perform a calibration for accurately controlling the operation of each switch 130 based on an output of the first and second monitoring photodetectors 133 and 134. For example, the processor 150 may determine whether the switch 130 is operated correctly in the first state, the second state, or the third state from outputs of the first and second monitoring photodetectors 133 and 134. Calibration may be performed periodically, or may be performed when a signal-to-noise ratio of the LiDAR apparatus is reduced. For example, FIG. 14 is a timing diagram showing a periodic calibration method. As shown in FIG. 14, a calibration may be performed initially at the beginning of the operation of a LiDAR apparatus, and then calibration may be periodically performed whenever a light steering operation of one frame is completed. FIG. 15 is a timing diagram showing a calibration method based on a signal-to-noise ratio. As shown in FIG. 15, after performing a calibration at the beginning stage of operation of a LIDAR apparatus, calibration is not performed while the signal-to-noise ratio is normal, and calibration may be performed only when the signal-to-noise ratio is less than a reference value.

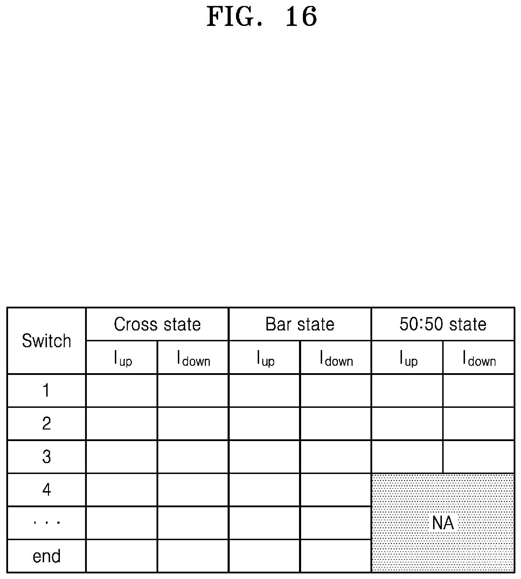

The calibration of the initial stage of operation of a LiDAR apparatus may be performed based on a lookup table stored in the processor 150. FIG. 16 shows a lookup table referenced to control states of a plurality of switches. In order to switch the switch 130 to the first state, the second state, or the third state, the processor 150 may store a lookup table including initial current values to be applied to the first and second electro-optic elements 131 and 132 in a memory mounted in the processor 150. In the lookup table shown in FIG. 16, switch No. 1 represents the root switch 130R, and switches No. 2 and No. 3 represent the first and second switches 130C1 and 130C2 arranged in child nodes of the root node. In a general situation, the remaining switches 130 except for the root switch 130R and the first and second switches 130C1 and 130C2 are not in a third state, thus, a third state condition with respect to the root switch 130R and the first and second switches 130C1 and 130C2 may be recorded in the lookup table. After performing an initial operation based on the lookup table, the processor 150 may perform calibration for adjusting current values to be applied to the first and second electro-optic elements 131 and 132 based on outputs of the first and second monitoring photodetectors 133 and 134. The processor 150 may include a plurality of lookup tables including predetermined current values corresponding to various environmental conditions.

The first and second monitoring photodetectors 133 and 134 may be arranged on the substrate 101 together with other components. Accordingly, the LiDAR apparatus according to the example embodiments may perform a calibration operation on one chip without using a separate calibration device.

The LiDAR apparatuses described above may be configured to be mounted on, for example, a vehicle to extract distance and relative speed information with the respect to vehicles in front. However, the LiDAR apparatuses according to the example embodiments are not necessarily applicable only to vehicles. For example, the LiDAR apparatuses according to the example embodiments may be mounted on a ship, an aircraft, etc. or a drone, etc. in addition to a vehicle, and may be used to search for and avoid obstacles in front of the ship, aircraft, drone, or the like.

It should be understood that example embodiments described herein should be considered in a descriptive sense only and not for purposes of limitation. Descriptions of features or aspects within each example embodiment should typically be considered as available for other similar features or aspects in other embodiments. While example embodiments have been described with reference to the figures, it will be understood by those of ordinary skill in the art that various changes in form and details may be made therein without departing from the scope as defined by the following claims and their equivalents.

## Claims

1. A light detection and ranging, LiDAR, apparatus (100) comprising:
a plurality of switches (130) connected in a binary tree structure in which the number of switches is doubled in a first direction;
a light source (110) connected to a root switch (130R), from among the plurality of switches, provided at a root node of the binary tree structure;
a photodetector (120) connected to the root switch;
a light transmission/reception optical system (140) connected to a plurality of terminal switches, from among the plurality of switches, provided at a plurality of terminal nodes of the binary tree structure, the light transmission/reception optical system being configured to transmit light to an outside of the LiDAR apparatus or receive light from the outside; and
at least one processor (150) configured to individually control the plurality of switches to allow light to travel along a selected path from the root switch to the plurality of terminal switches,
wherein the root switch (130R) is a 2×2 switch comprising a first upstream side port (130a), a second upstream side port (130b), a first downstream side port (130c), and a second downstream side port (130d),
wherein the light source is connected to the first upstream side port and the photodetector is connected to the second upstream side port, and
wherein the at least one processor is configured to apply a voltage only to switches, from among the plurality of switches, that are located in the selected path through which the light travels.

2. The LiDAR apparatus of claim 1, wherein the plurality of switches are configured to:
transmit light emitted from the light source to the light transmission/reception optical system through one of the plurality of terminal switches; and
transmit light received from the light transmission/reception optical system to the photodetector through any one of the plurality of terminal switches.

3. The LiDAR apparatus of claim 1 or 2, wherein the root switch comprises a first electro-optic element provided between the first upstream side port and the first downstream side port and a second electro-optic element provided between the second upstream side port and the second downstream side port, and
wherein the first electro-optic element and the second electro-optic element are configured to amplify input light and to modulate a phase of the input light based on an applied current, and optionally wherein the root switch further comprises:
a first coupler configured to optically couple the first upstream side port to the second upstream side port; and
a second coupler configured to optically couple the first downstream side port to the second downstream side port.

4. The LiDAR apparatus of claim 3, wherein, based on a phase difference between light amplified by the first electro-optic element and light amplified by the second electro-optic element, the root switch is configured to operate in any one of:
a first state in which light input to the first upstream side port is transmitted to the second downstream side port and light input to the second upstream side port is transmitted to the first downstream side port;
a second state in which the light input to the first upstream side port is transmitted to the first downstream side port and the light input to the second upstream side port is transmitted to the second downstream side port; and
a third state in which the light input to the first upstream side port is transmitted to the first downstream side port and the second downstream side port and the light input to the second upstream side port is transmitted to the first downstream side port and the second downstream side port,
and optionally wherein the at least one processor is configured to extract distance information and speed information with respect to external objects based on a frequency modulated continuous wave, FMCW, method,
wherein the root switch is configured to operate in the third state.

5. The LiDAR apparatus of claim 4, wherein the root switch is configured to operate in the first state when the phase difference is 0, operate in the second state when the phase difference is π, and operate in the third state when the phase difference is greater than 0 and less than π.

6. The LiDAR apparatus of claim 4, wherein the at least one processor is configured to extract distance information with respect to external objects based on a time of flight, TOF, method,
wherein the root switch is configured to:
operate in the first state while transmitting light and operate in the second state while receiving light, or
operate in the second state while transmitting light and operate in the first state while receiving light.

7. The LiDAR apparatus of claim 4, 5 or 6, wherein the root switch further comprises:
a first monitoring photodetector configured to measure an intensity of light passing through the first downstream side port; and
a second monitoring photodetector configured to measure the intensity of light passing through the second downstream side port, and optionally wherein the at least one processor is configured to:
control operations of the plurality of switches, and
perform calibration to control the root switch based on an output of the first monitoring photodetector and the second monitoring photodetector, and further optionally wherein the at least one processor is further configured to:
store an initial current value to be applied to the first electro-optic element and the second electro-optic element to switch the root switch to the first state, the second state, or the third state, and
based on a result of the calibration, adjust a current value applied to the first electro-optic element and the second electro-optic element.

8. The LiDAR apparatus of any preceding claim, wherein the plurality of switches comprises a first switch connected to the first downstream side port of the root switch and a second switch connected to the second downstream side port of the root switch, and
wherein the first switch and the second switch are 2x2 switches comprising the first upstream side port, the second upstream side port, the first downstream side port, and the second downstream side port.

9. The LiDAR apparatus of claim 8, wherein the second upstream side port of the first switch is connected to the first downstream side port of the root switch, and the first upstream side port of the second switch is connected to the second downstream side port of the root switch, and
wherein the LiDAR apparatus further comprises:
a first auxiliary light source connected to the first upstream side port of the first switch; and
a second auxiliary light source connected to the second upstream side port of the second switch.

10. The LiDAR apparatus of claim 9, further comprising:
a first waveguide configured to provide a portion of light output from the first auxiliary light source to the photodetector as local oscillator light; and
a second waveguide configured to provide a portion of light output from the second auxiliary light source to the photodetector as local oscillator light,
wherein the at least one processor is configured to extract distance information and speed information with respect to external objects based on a frequency modulated continuous wave, FMCW, method.

11. The LiDAR apparatus of any preceding claim, wherein the light source is a tunable light source configured to adjust a wavelength of light emitted from the light source.

12. The LiDAR apparatus of any preceding claim, further comprising a bandpass filter configured to pass light of a same wavelength band as a wavelength band of light emitted from the light source,
wherein the bandpass filter is provided between the second upstream side port of the root switch and the photodetector.

13. The LiDAR apparatus of any preceding claim, further comprising:a waveguide configured to provide a portion of light emitted from the light source to the photodetector as local oscillator light, and optionally further comprising an optical isolator provided on a light path between the light source and the root switch,
wherein the optical isolator is configured to pass light traveling from the light source toward the root switch and to block light traveling from the root switch toward the light source, and
wherein the at least one processor is configured to extract distance information and speed information with respect to external objects based on a frequency modulated continuous wave, FMCW, method.

15. The LiDAR apparatus of any preceding claim, further comprising a plurality of waveguides configured to provide an optical connection between the plurality of switches, the light source, the photodetector, and the light transmission/reception optical system, and optionally further comprising a substrate, and
wherein the plurality of switches, the light source, the photodetector, the light transmission/reception optical system, and the plurality of waveguides are provided on the substrate.

## Patentansprüche

1. Lichtdetektions- und Entfernungsmessungs-, LiDAR-Vorrichtung (100), umfassend:
mehrere Schalter (130), die in einer binären Baumstruktur verbunden sind, in der die Anzahl an Schaltern in einer ersten Richtung verdoppelt ist;
eine Lichtquelle (110), die mit einem Wurzelschalter (130R) aus den mehreren Schaltern verbunden ist, bereitgestellt an einem Wurzelknoten der binären Baumstruktur;
einen Photodetektor (120), der mit dem Wurzelschalter verbunden ist;
ein optisches System zum Übertragen/Empfangen von Licht (140), das mit mehreren Endschaltern aus den mehreren Schaltern verbunden ist, bereitgestellt an mehreren Endknoten der binären Baumstruktur, wobei das optische System zum Übertragen/Empfangen von Licht konfiguriert ist, um Licht zu einer Außenseite der LiDAR-Vorrichtung zu übertragen oder Licht von der Außenseite zu empfangen; und
zumindest einen Prozessor (150), der konfiguriert ist, um die mehreren Schalter einzeln zu steuern, um zu ermöglichen, dass sich Licht entlang eines ausgewählten Weges von dem Wurzelschalter zu den mehreren Endschaltern bewegt,
wobei der Wurzelschalter (130R) ein 2x2-Schalter ist, der einen ersten stromaufwärtsseitigen Anschluss (130a), einen zweiten stromaufwärtsseitigen Anschluss (130b), einen ersten stromabwärtsseitigen Anschluss (130c) und einen zweiten stromabwärtsseitigen Anschluss (130d) umfasst,
wobei die Lichtquelle mit dem ersten stromaufwärtsseitigen Anschluss verbunden ist und der Photodetektor mit dem zweiten stromaufwärtsseitigen Anschluss verbunden ist, und
wobei der zumindest eine Prozessor konfiguriert ist, um eine Spannung nur an Schalter aus den mehreren Schaltern anzulegen, die sich in dem ausgewählten Weg befinden, durch den sich das Licht bewegt.

2. LiDAR-Vorrichtung nach Anspruch 1, wobei die mehreren Schalter zu Folgendem konfiguriert sind:
Übertragen von Licht, das von der Lichtquelle emittiert wird, zu dem optischen System zum Übertragen/Empfangen von Licht durch einen von den mehreren Endschaltern; und
Übertragen von Licht, das von dem optischen System zum Übertragen/Empfangen von Licht empfangen wird, zu dem Photodetektor durch einen beliebigen von den mehreren Endschaltern.

3. LiDAR-Vorrichtung nach Anspruch 1 oder 2, wobei der Wurzelschalter ein erstes elektrooptisches Element, das zwischen dem ersten stromaufwärtsseitigen Anschluss und dem ersten stromabwärtsseitigen Anschluss bereitgestellt ist, und ein zweites elektrooptisches Element, das zwischen dem zweiten stromaufwärtsseitigen Anschluss und dem zweiten stromabwärtsseitigen Anschluss bereitgestellt ist, umfasst, und
wobei das erste elektrooptische Element und das zweite elektrooptische Element konfiguriert sind, um Eingangslicht zu verstärken und um eine Phase des Eingangslichts basierend auf einem angelegten Strom zu modulieren, und wobei optional der Wurzelschalter ferner Folgendes umfasst:
einen ersten Koppler, der konfiguriert ist, um den ersten stromaufwärtsseitigen Seitenanschluss optisch an den zweiten stromaufwärtsseitigen Seitenanschluss zu koppeln; und
einen zweiten Koppler, der konfiguriert ist, um den ersten stromabwärtsseitigen Anschluss optisch an den zweiten stromabwärtsseitigen Anschluss zu koppeln.

4. LiDAR-Vorrichtung nach Anspruch 3, wobei, basierend auf einer Phasendifferenz zwischen Licht, das durch das erste elektrooptische Element verstärkt wird, und Licht, das durch das zweite elektrooptische Element verstärkt wird, der Wurzelschalter konfiguriert ist, um in einem beliebigen von Folgendem zu arbeiten:
einem ersten Zustand, in dem Licht, das zu dem ersten stromaufwärtsseitigen Anschluss eingegeben wird, zu dem zweiten stromabwärtsseitigen Anschluss übertragen wird und Licht, das zu dem zweiten stromaufwärtsseitigen Anschluss eingegeben wird, zu dem ersten stromabwärtsseitigen Anschluss übertragen wird;
einem zweiten Zustand, in dem das Licht, das zu dem ersten stromaufwärtsseitigen Anschluss eingegeben wird, zu dem ersten stromabwärtsseitigen Anschluss übertragen wird und das Licht, das zu dem zweiten stromaufwärtsseitigen Anschluss eingegeben wird, zu dem zweiten stromabwärtsseitigen Anschluss übertragen wird; und
einem dritten Zustand, in dem das Licht, das zu dem ersten stromaufwärtsseitigen Anschluss eingegeben wird, zu dem ersten stromabwärtsseitigen Anschluss und dem zweiten stromabwärtsseitigen Anschluss übertragen wird und das Licht, das zu dem zweiten stromaufwärtsseitigen Anschluss eingegeben wird, zu dem ersten stromabwärtsseitigen Anschluss und dem zweiten stromabwärtsseitigen Anschluss übertragen wird,
und wobei optional der zumindest eine Prozessor konfiguriert ist, um Abstandsinformationen und Geschwindigkeitsinformationen in Bezug auf externe Objekte basierend auf einem frequenzmodulierten kontinuierlichen Wellen-, FMCW-Verfahren zu extrahieren,
wobei der Wurzelschalter konfiguriert ist, um in dem dritten Zustand zu arbeiten.

5. LiDAR-Vorrichtung nach Anspruch 4, wobei der Wurzelschalter konfiguriert ist, um in dem ersten Zustand zu arbeiten, wenn die Phasendifferenz 0 ist, in dem zweiten Zustand zu arbeiten, wenn die Phasendifferenz π ist, und in dem dritten Zustand zu arbeiten, wenn die Phasendifferenz größer als 0 und kleiner als π ist.

6. LiDAR-Vorrichtung nach Anspruch 4, wobei der zumindest eine Prozessor konfiguriert ist, um Abstandsinformationen in Bezug auf externe Objekte basierend auf einem Time-of-Flight-, TOF-Verfahren zu extrahieren,
wobei der Wurzelschalter zu Folgendem konfiguriert ist:
Arbeiten in dem ersten Zustand, während Licht übertragen wird, und Arbeiten in dem zweiten Zustand, während Licht empfangen wird, oder
Arbeiten in dem zweiten Zustand, während Licht übertragen wird, und Arbeiten in dem ersten Zustand, während Licht empfangen wird.

7. LiDAR-Vorrichtung nach Anspruch 4, 5 oder 6, wobei der Wurzelschalter ferner Folgendes umfasst:
einen ersten Überwachungsphotodetektor, der konfiguriert ist, um eine Intensität von Licht zu messen, das durch den ersten stromabwärtsseitigen Anschluss verläuft; und
einen zweiten Überwachungsphotodetektor, der konfiguriert ist, um die Intensität von Licht zu messen, das durch den zweiten stromabwärtsseitigen Anschluss verläuft, und wobei optional der zumindest eine Prozessor zu Folgendem konfiguriert ist:
Steuern von Vorgängen der mehreren Schalter, und
Durchführen von Kalibrierung, um den Wurzelschalter basierend auf einer Ausgabe des ersten Überwachungsphotodetektors und des zweiten Überwachungsphotodetektors zu steuern, und wobei ferner optional der zumindest eine Prozessor ferner zu Folgendem konfiguriert ist:
Speichern eines anfänglichen Stromwertes, der an das erste elektrooptische Element und das zweite elektrooptische Element anzulegen ist, um den Wurzelschalter in den ersten Zustand, den zweiten Zustand oder den dritten Zustand zu schalten, und
basierend auf einem Ergebnis der Kalibrierung, Einstellen eines Stromwertes, der an das erste elektrooptische Element und das zweite elektrooptische Element angelegt wird.

8. LiDAR-Vorrichtung nach einem vorhergehenden Anspruch, wobei die mehreren Schalter einen ersten Schalter, der mit dem ersten stromabwärtsseitigen Anschluss des Wurzelschalters verbunden ist, und einen zweiten Schalter, der mit dem zweiten stromabwärtsseitigen Anschluss des Wurzelschalters verbunden ist, umfassen, und
wobei der erste Schalter und der zweite Schalter 2×2-Schalter sind, die den ersten stromaufwärtsseitigen Anschluss, den zweiten stromaufwärtsseitigen Anschluss, den ersten stromabwärtsseitigen Anschluss und den zweiten stromabwärtsseitigen Anschluss umfassen.

9. LiDAR-Vorrichtung nach Anspruch 8, wobei der zweite stromaufwärtsseitige Anschluss des ersten Schalters mit dem ersten stromabwärtsseitigen Anschluss des Wurzelschalters verbunden ist und der erste stromaufwärtsseitige Anschluss des zweiten Schalters mit dem zweiten stromabwärtsseitigen Anschluss des Wurzelschalters verbunden ist, und
wobei die LiDAR-Vorrichtung ferner Folgendes umfasst:
eine erste Hilfslichtquelle, die mit dem ersten stromaufwärtsseitigen Anschluss des ersten Schalters verbunden ist; und
eine zweite Hilfslichtquelle, die mit dem zweiten stromaufwärtsseitigen Anschluss des zweiten Schalters verbunden ist.

10. LiDAR-Vorrichtung nach Anspruch 9, ferner umfassend:
einen ersten Wellenleiter, der konfiguriert ist, um einen Teil von Licht, das von der ersten Hilfslichtquelle ausgegeben wird, dem Photodetektor als lokales Oszillatorlicht bereitzustellen;
und
einen zweiten Wellenleiter, der konfiguriert ist, um einen Teil von Licht, das von der zweiten Hilfslichtquelle ausgegeben wird, dem Photodetektor als lokales Oszillatorlicht bereitzustellen,
wobei der zumindest eine Prozessor konfiguriert ist, um Abstandsinformationen und Geschwindigkeitsinformationen in Bezug auf externe Objekte basierend auf einem frequenzmodulierten kontinuierlichen Wellen-, FMCW-Verfahren zu extrahieren.

11. LiDAR-Vorrichtung nach einem vorhergehenden Anspruch, wobei die Lichtquelle eine abstimmbare Lichtquelle ist, die konfiguriert ist, um eine Wellenlänge von Licht, das von der Lichtquelle emittiert wird, einzustellen.

12. LiDAR-Vorrichtung nach einem vorhergehenden Anspruch, ferner umfassend einen Bandpassfilter, der konfiguriert ist, um Licht eines gleichen Wellenlängenbands wie ein Wellenlängenband von Licht, das von der Lichtquelle emittiert wird, durchzulassen,
wobei der Bandpassfilter zwischen dem zweiten stromaufwärtsseitigen Anschluss des Wurzelschalters und dem Photodetektor bereitgestellt ist.

13. LiDAR-Vorrichtung nach einem vorhergehenden Anspruch, ferner umfassend: einen Wellenleiter, der konfiguriert ist, um einen Teil von Licht, das von der Lichtquelle emittiert wird, dem Photodetektor als lokales Oszillatorlicht bereitzustellen, und optional ferner umfassend einen optischen Isolator, der auf einem Lichtweg zwischen der Lichtquelle und dem Wurzelschalter bereitgestellt ist,
wobei der optische Isolator konfiguriert ist, um Licht, das sich von der Lichtquelle zu dem Wurzelschalter bewegt, durchzulassen und um Licht, das sich von dem Wurzelschalter zu der Lichtquelle bewegt, zu blockieren, und
wobei der zumindest eine Prozessor konfiguriert ist, um Abstandsinformationen und Geschwindigkeitsinformationen in Bezug auf externe Objekte basierend auf einem frequenzmodulierten kontinuierlichen Wellen-, FMCW-Verfahren zu extrahieren.

14. LiDAR-Vorrichtung nach einem vorhergehenden Anspruch, ferner umfassend mehrere Wellenleiter, die konfiguriert sind, um eine optische Verbindung zwischen den mehreren Schaltern, der Lichtquelle, dem Photodetektor und dem optischen System zum Übertragen/Empfangen von Licht bereitzustellen, und optional ferner umfassend ein Substrat, und
wobei die mehreren Schalter, die Lichtquelle, der Photodetektor, das optische System zum Übertragen/Empfangen von Licht und die mehreren Wellenleiter auf dem Substrat bereitgestellt sind.

## Revendications

1. Appareil de détection et de télémétrie par la lumière, LIDAR, (100) comprenant :
une pluralité de commutateurs (130) connectés dans une structure en arbre binaire dans laquelle le nombre de commutateurs est doublé dans une première direction ;
une source de lumière (110) connectée à un commutateur racine (130R), parmi la pluralité de commutateurs, prévue au niveau d'un nœud racine de la structure en arbre binaire ;
un photodétecteur (120) connecté au commutateur racine ;
un système optique de transmission/réception de lumière (140) connecté à une pluralité de commutateurs terminaux, parmi la pluralité de commutateurs, prévu au niveau d'une pluralité de nœuds terminaux de la structure en arbre binaire, le système optique de transmission/réception de lumière étant configuré pour transmettre de la lumière vers l'extérieur de l'appareil LiDAR ou recevoir de la lumière depuis l'extérieur ; et
au moins un processeur (150) configuré pour commander individuellement la pluralité de commutateurs pour permettre à la lumière de se déplacer le long d'un trajet sélectionné du commutateur racine à la pluralité de commutateurs terminaux,
dans lequel le commutateur racine (130R) est un commutateur 2×2 comprenant un premier port du côté amont (130a), un second port du côté amont (130b), un premier port du côté aval (130c) et un second port du côté aval (130d),
dans lequel la source de lumière est connectée au premier port du côté amont et le photodétecteur est connecté au second port du côté amont, et
dans lequel l'au moins un processeur est configuré pour appliquer une tension uniquement aux commutateurs, parmi la pluralité de commutateurs, qui sont situés sur le trajet sélectionné via lequel la lumière se déplace.

2. Appareil LiDAR selon la revendication 1, dans lequel la pluralité de commutateurs sont configurés pour :
transmettre la lumière émise par la source de lumière au système optique de transmission/réception de lumière par l'intermédiaire de l'un de la pluralité de commutateurs terminaux ; et
transmettre la lumière reçue du système optique de transmission/réception de lumière au photodétecteur par l'intermédiaire de l'un quelconque de la pluralité de commutateurs terminaux.

3. Appareil LiDAR selon la revendication 1 ou 2, dans lequel le commutateur racine comprend un premier élément électro-optique prévu entre le premier port du côté amont et le premier port du côté aval et un second élément électro-optique prévu entre le second port du côté amont et le second port du côté aval, et
dans lequel le premier élément électro-optique et le second élément électro-optique sont configurés pour amplifier la lumière d'entrée et pour moduler une phase de la lumière d'entrée sur la base d'un courant appliqué, et éventuellement dans lequel le commutateur racine comprend en outre :
un premier coupleur configuré pour coupler optiquement le premier port du côté amont au second port du côté amont ; et
un second coupleur conçu pour coupler optiquement le premier port du côté aval au second port du côté aval.

4. Appareil LiDAR selon la revendication 3, dans lequel, sur la base d'une différence de phase entre la lumière amplifiée par le premier élément électro-optique et la lumière amplifiée par le second élément électro-optique, le commutateur racine est configuré pour fonctionner dans l'un quelconque de :
un premier état dans lequel l'entrée de lumière vers le premier port du côté amont est transmise au second port du côté aval et l'entrée de lumière vers le second port du côté amont est transmise au premier port du côté aval ;
un deuxième état dans lequel l'entrée de lumière vers le premier port du côté amont est transmise au premier port du côté aval et l'entrée de lumière vers le second port du côté amont est transmise au second port du côté aval ; et
un troisième état dans lequel l'entrée de lumière vers le premier port du côté amont est transmise au premier port du côté aval et au second port du côté aval et l'entrée de lumière vers le second port du côté amont est transmise au premier port du côté aval et au second port du côté aval,
et éventuellement dans lequel l'au moins un processeur est configuré pour extraire des informations de distance et des informations de vitesse par rapport à des objets externes sur la base d'un procédé à onde continue modulée en fréquence, FMCW,
dans lequel le commutateur racine est configuré pour fonctionner dans le troisième état.

5. Appareil LiDAR selon la revendication 4, dans lequel le commutateur racine est configuré pour fonctionner dans le premier état lorsque la différence de phase est 0, fonctionner dans le deuxième état lorsque la différence de phase est π, et fonctionner dans le troisième état lorsque la différence de phase est supérieure à 0 et inférieure à π.

6. Appareil LIDAR selon la revendication 4, dans lequel l'au moins un processeur est configuré pour extraire des informations de distance par rapport à des objets externes sur la base d'un procédé de temps de vol, TOF,
dans lequel le commutateur racine est configuré pour :
fonctionner dans le premier état en transmission de lumière et fonctionner dans le deuxième état en réception de lumière, ou
fonctionner dans le deuxième état en transmission de lumière et fonctionner dans le premier état en réception de lumière.

7. Appareil LiDAR selon la revendication 4, 5 ou 6, dans lequel le commutateur racine comprend en outre :
un premier photodétecteur de surveillance conçu pour mesurer une intensité de lumière traversant le premier port du côté aval ; et
un second photodétecteur de surveillance configuré pour mesurer l'intensité de la lumière traversant le second port du côté aval, et éventuellement dans lequel l'au moins un processeur est configuré pour :
commander des opérations de la pluralité de commutateurs, et
effectuer un étalonnage pour commander le commutateur racine sur la base d'une sortie du premier photodétecteur de surveillance et du second photodétecteur de surveillance, et en outre éventuellement dans lequel l'au moins un processeur est en outre configuré pour :
stocker une valeur de courant initiale à appliquer au premier élément électro-optique et au second élément électro-optique pour commuter le commutateur racine vers le premier état, le deuxième état ou le troisième état, et
sur la base d'un résultat de l'étalonnage, ajuster une valeur de courant appliquée au premier élément électro-optique et au second élément électro-optique.

8. Appareil LiDAR selon l'une quelconque des revendications précédentes, dans lequel la pluralité de commutateurs comprend un premier commutateur connecté au premier port du côté aval du commutateur racine et un deuxième commutateur connecté au second port du côté aval du commutateur racine, et
dans lequel le premier commutateur et le deuxième commutateur sont des commutateurs 2×2 comprenant le premier port du côté amont, le second port du côté amont, le premier port du côté aval et le second port du côté aval.

9. Appareil LiDAR selon la revendication 8, dans lequel le second port du côté amont du premier commutateur est connecté au premier port du côté aval du commutateur racine, et le premier port du côté amont du deuxième commutateur est connecté au second port du côté aval du commutateur racine, et
dans lequel l'appareil LiDAR comprend en outre :
une première source de lumière auxiliaire connectée au premier port du côté amont du premier commutateur ; et
une seconde source de lumière auxiliaire connectée au second port du côté amont du deuxième commutateur.

10. Appareil LiDAR selon la revendication 9, comprenant en outre :
un premier guide d'ondes configuré pour fournir une partie de la lumière émise par la première source de lumière auxiliaire au photodétecteur en tant que lumière d'oscillateur local ; et
un second guide d'ondes configuré pour fournir une partie de la lumière émise par la seconde source de lumière auxiliaire au photodétecteur en tant que lumière d'oscillateur local,
dans lequel l'au moins un processeur est configuré pour extraire des informations de distance et des informations de vitesse par rapport à des objets externes sur la base d'un procédé à onde continue modulée en fréquence, FMCW.

11. Appareil LiDAR selon l'une quelconque des revendications précédentes, dans lequel la source de lumière est une source de lumière accordable configurée pour ajuster une longueur d'onde de lumière émise par la source lumineuse.

12. Appareil LiDAR selon l'une quelconque des revendications précédentes, comprenant en outre un filtre passe-bande configuré pour laisser passer une lumière d'une même bande de longueur d'onde qu'une bande de longueur d'onde de lumière émise par la source de lumière,
dans lequel le filtre passe-bande est prévu entre le second port du côté amont du commutateur racine et le photodétecteur.

13. Appareil LiDAR selon l'une quelconque des revendications précédentes, comprenant en outre : un guide d'ondes configuré pour fournir une partie de la lumière émise par la source lumineuse au photodétecteur en tant que lumière d'oscillateur local, et comprenant éventuellement en outre un isolateur optique prévu sur un trajet de lumière entre la source lumineuse et le commutateur racine,
dans lequel l'isolateur optique est configuré pour laisser passer la lumière se déplaçant de la source de lumière vers le commutateur racine et pour bloquer la lumière se déplaçant du commutateur racine vers la source de lumière, et
dans lequel l'au moins un processeur est configuré pour extraire des informations de distance et des informations de vitesse par rapport à des objets externes sur la base d'un procédé à onde continue modulée en fréquence, FMCW.

14. Appareil LiDAR selon l'une quelconque des revendications précédentes, comprenant en outre une pluralité de guides d'ondes configurés pour fournir une connexion optique entre la pluralité de commutateurs, la source de lumière, le photodétecteur et le système optique de transmission/réception de lumière, et éventuellement comprenant en outre un substrat, et
dans lequel la pluralité de commutateurs, la source de lumière, le photodétecteur, le système optique de transmission/réception de lumière et la pluralité de guides d'onde sont prévus sur le substrat.
